# EUROPÄISCHE PATENTSCHRIFT

(11) **EP 2 682 279 B1**
(45) Veröffentlichungstag und Bekanntmachung des Hinweises auf die Patenterteilung: **09.08.2017**
(21) Anmeldenummer: 13171334.9
(22) Anmeldetag: 11.06.2013
(51) Int. Cl.: B60C 9/00, B60C 9/20

(54) **Fahrzeugluftreifen**
Pneumatic tyres for a vehicle
Pneus de véhicule

(30) Priorität: 02.07.2012 DE 102012105847
(43) Veröffentlichungstag der Anmeldung: 08.01.2014
(73) Patentinhaber: Continental Reifen Deutschland GmbH, 30165 Hannover (DE)
(72) Erfinder: Ludwig, Reinhard, 31848 Bad Münder (DE); Volk, Heiner, 31535 Neustadt (DE); Kvasnica, Milan, 02001 Puchov (SK)
(74) Vertreter: Widjaja, Wira

(56) Entgegenhaltungen:
- EP-A2- 1 162 086
- EP-B1- 1 209 009
- JP-A- 2001 322 404
- US-A- 5 332 017

## Beschreibung

Die Erfindung betrifft einen PKW-Fahrzeugluftreifen in Radialbauart mit einem mehrlagigen Gürtel, wobei eine erste Gürtellage und eine zweite Gürtellage als Festigkeitsträger Monofilamente aus Stahl aufweisen, wobei die Monofilamente der ersten Gürtellage kreuzend zu den Monofilamenten der zweiten Gürtellage angeordnet sind und wobei eine dritte Gürtellage radial außen oberhalb der zweiten Gürtellage angeordnet ist, welche als Festigkeitsträger Korde aufweist.

Ein derartiger Fahrzeugluftreifen ist aus der US 5 332 017 A bekannt geworden. Die Monofilamente der ersten Gürtellage sind kreuzend zu den Monofilamenten der zweiten Gürtellage angeordnet und schließen einen Winkel von 40° mit der Umfangsrichtung ein.

Aus der EP 1 162 086 A2 ist ein Gürtel, bestehend aus zwei Monofilamentlagen bekannt, welche optional von einer Nylonkorde aufweisenden Bandage abgedeckt ist.

Aus der EP 1 209 009 B1 ist es bekannt, dass die erste und zweite Gürtellage, also die radial innerste Gürtellage und die radial oberhalb dieser innersten Gürtellage angeordnete Gürtellage Monofilamente als Festigkeitsträger aufweisen. Die Monofilamente sind derart innerhalb dieser Gürtellagen angeordnet, dass sie einen Winkel zwischen + (-) 10° und + (-)-35° mit der Umfangsrichtung des Reifens einschließen, wobei die Monofilamente der einen Lage kreuzend zu den Monofilamenten der anderen Lage angeordnet sind. Abgedeckt sind die beiden Gürtellagen durch eine sogenannte Bandagenlage, welche als Festigkeitsträger organischen Faserkord aufweist, welcher in einem Winkel zwischen 0° bis 5° in Bezug auf die Umfangsrichtung angeordnet ist. Der Gürtel sorgt für die Steifigkeit der Reifenlauffläche in Umfangs- und Querrichtung, dient der Kraftübertragung sowie der Seitenführung und ist u.a. für den Abrieb des Reifens relevant.

Durch den Einsatz von Monofilamenten in den Gürtellagen ist der Rollwiderstand gesenkt. Denn die Monofilamente weisen einen geringeren Durchmesser als bisher eingesetzte, vergleichbare Korde auf. Die Gürtellage, welche aus gummierten Monofilamenten besteht, weist daher eine geringere Dicke als Gürtellagen mit Korden aus, welche aus miteinander verdrehten Filamenten bestehen. Es ist an Material und an Gewicht des Reifens eingespart, wodurch ein Vorteil in Bezug auf den Rollwiderstand des Reifens erreicht ist.

Bei der vorgenannten Gürtelkonstruktion nehmen die erste und die zweite Gürtellage zusammen etwa 80% der Umfangskraft des Reifens während seines Fahrbetriebes auf, während die Bandagenlage etwa 20% der Umfangskraft aufnimmt.

Es hat sich jedoch herausgestellt, daß die beschriebene Konstruktion mit zwei Monofilamentgürtellagen eine geringere Schräglaufsteifigkeit aufweist als vergleichbare Konstruktionen mit Korden, bei denen zwei oder mehr Filamente miteinander verseilt sind. Dies verschlechtert das Fahrverhalten (Handling) des Fahrzeugs.

"Schräglaufsteifigkeit" meint das Verhältnis von Seitenkraft zu Schräglaufwinkel, gemessen bei kleinen Schräglaufwinkeln von etwa 1 °.

Es ist daher die Aufgabe der Erfindung, einen Fahrzeugluftreifen bereitzustellen, der eine rollwiderstandsoptimierte Gürtelkonstruktion aufweist und bei dem gleichzeitig die Schräglaufsteifigkeit verbessert ist.

Die Aufgabe wird gelöst, indem die Monofilamente der ersten und der zweiten Gürtellage einen Winkel α von etwa 45° mit der Umfangsrichtung einschließen und dass die Festigkeitsträger der dritten Gürtellage Stahlkorde sind, welche einen Winkel β zwischen 0° und 10° mit der Umfangsrichtung des Fahrzeugluftreifens einschließen.

"Etwa" meint hier +/- 5°.

Durch diese vorgenannte Konstruktion ist einerseits der Rollwiderstand positiv beeinflusst, da durch die Verwendung von Monofilamenten in der ersten und zweiten Gürtellage diese dünner sind, weniger Material verbaut ist und somit diese beiden Gürtellagen leichter an Gewicht sind. Dieses ist sehr vorteilhaft für die Haltbarkeit und den Rollwiderstand, da die Scherkräfte in diesen beiden Gürtellagen, welche insbesondere im Bereich der Gürtelkanten auftreten und die Haltbarkeit und den Rollwiderstand nachteilig beeinflussen, verringert sind.

Zudem ist weiterhin die Schräglaufsteifigkeit verbessert. Die Monofilamente der ersten und der zweiten Gürtellage sind jeweils in einem Winkel von etwa + (-) 45° in Bezug auf die Umfangsrichtung angeordnet und verlaufen somit etwa diagonal zur Umfangsrichtung Reifens. Hierdurch sind die Scherkräfte in den Gürtellagen am effektivsten vermieden. Die verringerte Umfangssteifigkeit dieser ersten und zweiten Gürtellage wird durch die dritte, radial äußerste Gürtellage, welche Stahlkorde in Umfangsrichtung verlaufend aufweist, kompensiert. Bei der Gürtelkonstruktion des erfindungsgemäßen Reifens nehmen die erste und die zweite Gürtellage zusammen etwa 20% der Umfangskraft des Reifens während seines Fahrbetriebes auf, während die dritte Gürtellage etwa 80% der Umfangskraft aufnimmt. Es hat sich gezeigt, daß die folgende Beziehung gilt: Ein Reifen mit hoher Umfangssteifigkeit benötigt große Gürtelwinkel, um eine hohe Schräglaufsteifigkeit einzustellen. Dadurch ist ein vorteilhaftes Verhältnis von Umfangssteifigkeit zu Steifigkeit in der Gürtelebene hergestellt. Vorteil dieser Ausführung ist, daß bei Geradeauslauf nur eine geringe Kopplung beziehungsweise Scherkraft zwischen den Gürtellagen benötigt wird. Erst bei Kurvenfahrt wird die Ankopplung der ersten Winkellage an den zweiten Gürtel notwendig und die Scherkräfte bilden sich aus.
"Axial" meint eine Richtungsangabe, die parallel zur Drehachse des Fahrzeugluftreifens verläuft.
"Monofilament" meint einen Festigkeitsträger, der aus einem einzigen Filament (linienförmiges Element beliebiger Länge) besteht.
"PKW-Fahrzeugluftreifen" meint PKW- und Van-Fahrzeugluftreifen.
"Erste Gürtellage" meint diejenige Gürtellage des Gürtelpakets, die radial innen innerhalb des Gürtelpakets angeordnet ist.
"Zweite Gürtellage" mein diejenige Gürtellage des Gürtelpakets, die radial außen auf der ersten Gürtellage angeordnet ist.
"Dritte Gürtellage" meint die radial äußerste Gürtellage des Gürtelpakets.

In einer Weiterbildung der Erfindung ist vorgesehen, dass die Festigkeitsträger der dritten Gürtellage Korde aus High Elongation- (HE)-Stahl sind. HE-Stahlkord meint, dass der Stahlkord bei niedriger Dehnung bis 1% nur geringe Kräfte (zirka 20N bis 50N je Kord) aufbaut und eine Erhebung des Reifens in die Heizform erlaubt.

In einer Weiterbildung der Erfindung ist vorgesehen, dass die Festigkeitsträger der dritten Gürtellage einen Winkel zwischen 0° und 5°, vorzugsweise zwischen 0° und 2° mit der Umfangsrichtung des Fahrzeugluftreifens einschließen. In dieser Anordnung ist eine besonders gute Aufnahme der Umfangskräfte durch die dritte Gürtellage ermöglicht.

Die Erfindung wird nun anhand einer einzigen Figur, die ein schematisches Ausführungsbeispiel darstellt, näher erläutert:

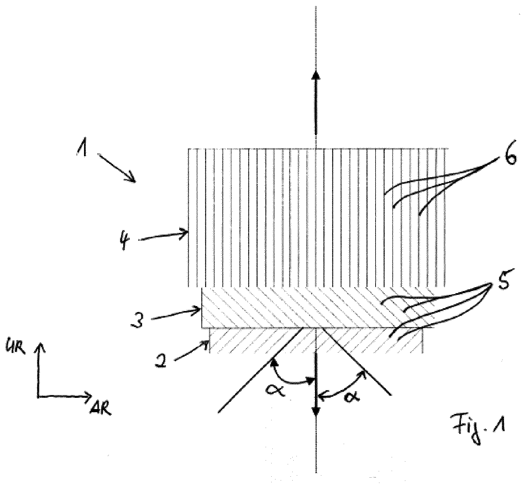

Die Fig. 1 zeigt eine Aufsicht auf das Gürtelpaket 1 eines PKW-Luftreifens. Die Gürtellagen 2, 3, 4 sind derart dargestellt, dass die obere Gummierungsschicht abgedeckt ist und die Festigkeitsträger freigelegt sind.

Die wesentlichen Bauteile, aus welchen sich ein PKW-Fahrzeugluftreifen, welcher das dargestellte Gürtelpaket 1 aufweist, zusammensetzt, sind: ein profilierter Laufstreifen, ein aus einer ersten Gürtellage 2, einer zweiten Gürtellage 3 und einer dritten Gürtellage 4 bestehendes Gürtelpaket 1, eine einlagig oder alternativ zweilagig ausgeführte Karkasse, eine weitgehend luftdicht ausgeführte Innenschicht, Wülste mit Wulstkernen und Kernprofilen, sowie Seitenwände. Die Karkasse kann in herkömmlicher und bekannter Weise ausgeführt sein und somit in eine Gummimischung eingebettete, in radialer Richtung verlaufende Verstärkungsfäden aus einem textilen Material oder aus Stahlkord aufweisen. Die Karkasse ist um die Wulstkerne von innen nach außen geführt, ihre Hochschläge verlaufen neben den Wulstkernprofilen in Richtung Gürtelpaket 1.

Die erste Gürtellage 2 und die zweite Gürtellage 3 bestehen aus in eine Gummimischung eingebetteten Monofilamenten 5 aus Stahl, welche parallel zueinander verlaufen. Die Monofilamente 5 der ersten Gürtellage 2 sind in kreuzender Anordnung zu den Monofilamenten 5 der zweiten Gürtellage 3 orientiert und schließen mit der Reifenumfangsrichtung (UR) jeweils einen Winkel α zwischen + (-) 40° und + (-) 50°, vorzugsweise einen Winkel α von + (-) 45° ein. Die Monofilamente 5 weisen einen runden Querschnitt mit einem Durchmesser von 0,25 mm bis 0,5 mm, vorzugsweise von 0,35mm auf. Die erste Gürtellage 2 ist radial innen angeordnet, während die zweite Gürtellage 3 radial außen auf der ersten Gürtellage 2 aufliegt. Die dritte Gürtellage 4 des Gürtelpakets 1 liegt radial außen auf der zweiten Gürtellage 3 auf und deckt sowohl die erste Gürtellage 2 als auch die zweite Gürtellage 3 vollständig ab. Die Festigkeitsträger der dritten Gürtellage 4 sind Stahlkorde 6, welche einen Winkel β zwischen 0° und 10°, hier etwa 0° mit der Umfangsrichtung (UR) des Fahrzeugluftreifens einschließen. Der Stahlkord 6 weist die Konstruktion 3 x 4 x 0,2 mm auf.

### Liste der Bezugszeichen

- 1: Gürtelpaket
- 2: Erste Gürtellage
- 3: Zweite Gürtellage
- 4: Dritte Gürtellage
- 5: Monofilament
- 6: Stahlkord

- UR: Umfangsrichtung
- aR: axiale Richtung

## Patentansprüche

1. PKW-Fahrzeugluftreifen in Radialbauart mit einem mehrlagigen Gürtel (1), wobei eine erste und eine zweite Gürtellage (2, 3) als Festigkeitsträger Monofilamente (5) aus Stahl aufweisen, wobei die Monofilamente (5) der ersten Gürtellage (2) kreuzend zu den Monofilamenten (5) der zweiten Gürtellage (3) angeordnet sind und wobei eine dritte Gürtellage (4) radial außen oberhalb der zweiten Gürtellage (3) angeordnet ist, welche als Festigkeitsträger Korde aufweist,
**dadurch gekennzeichnet, dass** die Monofilamente (5) der ersten und der zweiten Gürtellage (2, 3) einen Winkel α von etwa 45° mit der Umfangsrichtung (UR) einschließen und dass die Festigkeitsträger der dritten Gürtellage (4) Stahlkorde (6) sind, welche einen Winkel β zwischen 0° und 10° mit der Umfangsrichtung (UR) des Fahrzeugluftreifens einschließen.

2. Fahrzeugluftreifen nach Anspruch 1,
**dadurch gekennzeichnet, dass** die Festigkeitsträger der dritten Gürtellage (4) Korde (6) aus HE-Stahl sind.

3. Fahrzeugluftreifen nach Anspruch 1 oder 2,
**dadurch gekennzeichnet, dass** die Festigkeitsträger (6) der dritten Gürtellage (4) einen Winkel β zwischen 0° und 5°, vorzugsweise zwischen 0° und 2° mit der Umfangsrichtung (UR) des Fahrzeugluftreifens einschließen.

## Claims

1. Pneumatic car tyre of a radial type of construction with a multi-ply breaker belt (1), a first and a second belt ply (2, 3) comprising steel monofilaments (5) as reinforcing elements, the monofilaments (5) of the first belt ply (2) being arranged crossing the monofilaments (5) of the second belt ply (3), and a third belt ply (4) that comprises cords as reinforcing elements being arranged radially outside above the second belt ply (3),
**characterized in that** the monofilaments (5) of the first and the second belt ply (2, 3) form an included angle α of approximately 45° with the circumferential direction (UR) and **in that** the reinforcing elements of the third belt ply (4) are steel cords (6), which form an included angle β of between 0° and 10° with the circumferential direction (UR) of the pneumatic vehicle tyre.

2. Pneumatic vehicle tyre according to Claim, 1,
**characterized in that** the reinforcing elements of the third belt ply (4) are cords (6) of HE steel.

3. Pneumatic vehicle tyre according to Claim 1 or 2,
**characterized in that** the reinforcing elements (6) of the third belt ply (4) form an included angle β of between 0° and 5°, preferably between 0° and 2°, with the circumferential direction (UR) of the pneumatic vehicle tyre.

## Revendications

1. Pneumatique de véhicule de tourisme de type de construction radiale avec une ceinture (1) à plusieurs couches ;
une première et une deuxième couche de ceinture (2,3) comportant comme éléments de renforcement des monofilaments (5) en acier, les monofilaments (5) de la première couche de ceinture (2) étant disposés d'une manière croisée par rapport aux monofilaments (5) de la deuxième couche de ceinture (3) et une troisième couche de ceinture (4) étant disposée dans le plan radial à l'extérieur au-dessus de ladite deuxième couche de ceinture (3) et comportant comme éléments de renforcement des câbles,
**caractérisé en ce que** les monofilaments (5) de la première et de la deuxième couche de ceinture (2, 3) forment un angle α d'approximativement 45° par rapport à la direction périphérique (UR) et **en ce que** les éléments de renforcement de la troisième couche de ceinture (4) sont des câbles (6) en acier formant un sanglez compris entre 0° et 10° par rapport à la direction périphérique (UR) du pneumatique de véhicule.

2. Pneumatique de véhicule selon la revendication 1, **caractérisé en ce que** les éléments de renforcement de la troisième couche de ceinture (4) sont des câbles (6) en acier HE.

3. Pneumatique de véhicule selon la revendication 1 ou 2, **caractérisé en ce que** les éléments de renforcement (6) de la troisième couche de ceinture (4) forment un angle β compris entre 0° et 5°, de préférence entre 0° et 2°, par rapport à la direction périphérique (UR) du pneumatique de véhicule.
